# EUROPÄISCHE PATENTSCHRIFT

(11) **EP 2 676 358 B1**
(45) Veröffentlichungstag und Bekanntmachung des Hinweises auf die Patenterteilung: **18.09.2019**
(21) Anmeldenummer: 12703040.1
(22) Anmeldetag: 31.01.2012
(51) Int. Cl.: H02K 15/04

(54) **VORRICHTUNG UND VERFAHREN ZUR HERSTELLUNG VON DRAHTWICKLUNGEN**
DEVICE AND MANUFACTURING METHOD OF A WIRE WINDING
DISPOSITIF ET PROCÉDÉ DE BOBINER UN ENROULEMENT DE FIL CONDUCTEUR

(30) Priorität: 17.02.2011 DE 102011004285
(43) Veröffentlichungstag der Anmeldung: 25.12.2013
(73) Patentinhaber: Robert Bosch GmbH, 70442 Stuttgart (DE)
(72) Erfinder: MAIER, Michael, 71686 Remseck (DE); MUELLER, Heinz, 71691 Freiberg (DE)
(86) Internationale Anmeldenummer: PCT/EP2012/051538
(87) Internationale Veröffentlichungsnummer: WO 2012/110311

(56) Entgegenhaltungen:
- DE-A1- 1 552 146
- DE-A1-102006 009 107
- GB-A- 1 358 070
- US-A- 4 399 843
- US-A1- 2004 261 885

## Beschreibung

### Stand der Technik

Die Erfindung geht aus von einer Vorrichtung zur Herstellung von Drahtwicklungen nach der Gattung des unabhängigen Patentanspruchs 1, und von einem Verfahren zur Herstellung von Drahtwicklungen nach der Gattung des unabhängigen Patentanspruchs 10.

In der Offenlegungsschrift DE1552146 wird eine Vorrichtung zum Ausrichten von Draht beschrieben. Die beschriebene Vorrichtung formt auf kontinuierliche Weise einen Zuführungsdraht zu einer aus mehreren Windungen bestehenden Kette, wobei in jeder Windung Drahtteile zwischen zwei Biegestiften zu einer völlig geradlinigen Form ausgerichtet sind. Zu diesem Zweck umfasst die beschriebene Vorrichtung zwei Trommeln, welche mit senkrecht stehenden Drehachsen in unmittelbarer Nähe zueinander drehend angeordnet sind. Die Trommeln weisen auf ihren jeweiligen Mantelflächen eingepresste senkrecht abstehende Biegestifte auf. Eine Drahtzuführung führt einen Draht bei sich synchron drehenden Trommeln von einem Biegestift der ersten Trommel zu einem diesem gegenüberliegenden Biegestift auf der zweiten Trommel, welche unterhalb der ersten Trommel angeordnet ist. Somit erfolgt das Aufwickeln des Drahtes auf die Biegestifte durch die Kombination zweier Bewegungen, nämlich einer vorgegebenen Bahnkurve der Drahtführung, welche eine im Wesentlichen elliptische Form aufweist, welche durch die Auf- und Abbewegung der Drahtzuführung entsteht, und der Drehbewegung der Trommeln. Dadurch entsteht eine an dem weiteren Umfang beider Trommeln geführte flache Wicklung. Diese wird noch auf einem mitlaufenden Klebeband fixierend gehalten und über einen Abgreifer vom Umfang der Trommeln gelöst. Die Ausrichtung des Drahtes erfolgt dadurch, dass die beiden Trommeln nach dem Aufwickeln des Drahtes auf die Biegestifte örtlich voneinander entfernt werden, wodurch der Draht über die Elastizitätsgrenze straff gespannt wird.

Die DE 10 2006 009 107 A1 und die US 4,399,843 A offenbaren jeweils eine Vorrichtung zur Herstellung von Drahtwicklungen mit einer drehbeweglich gelagerten Trommel, welche mit einem vorgegebenen Abstand zueinander montierte Biegestifte aufweist, welche im Wesentlichen senkrecht abstehend an einer Mantelfläche der Trommel befestigt sind. Eine bewegliche Drahtführungsvorrichtung wickelt den Draht um die von der Trommel abstehenden Biegestifte, um mindestens eine Drahtwindung zu erzeugen, wobei die Drahtführungsvorrichtung den Draht zwischen zwei Biegestiften unter einer vorgebbaren elastischen Spannung ausrichtet und den Draht unter Spannung durch eine Rotationsbewegung um den jeweiligen Biegestift wickelt.

Die US 2004/0261885 A1 und die GB 1 358 070 A1 offenbaren jeweils eine Vorrichtung zur Herstellung von Drahtwicklungen mit mindestens zwei drehbeweglich gelagerten Trommeln, welche mit einem vorgegebenen Abstand zueinander montiert sind. Die mindestens zwei Trommeln weisen jeweils mindestens einen Biegestift auf, welche im Wesentlichen senkrecht abstehend an einer Mantelfläche der korrespondierenden Trommel befestigt sind. Eine bewegliche Drahtführungsvorrichtung wickelt den Draht um die von den mindesten zwei Trommeln abstehenden Biegestifte, um mindestens eine Drahtwindung zu erzeugen, wobei die Drahtführungsvorrichtung den Draht zwischen zwei Biegestiften unter einer vorgebbaren elastischen Spannung ausrichtet und den Draht unter Spannung durch eine Rotationsbewegung um den jeweiligen Biegestift wickelt. Eine erste Trommel ist mit einer vorgegebenen ersten Anzahl von Biegestiften an einem Randbereich auf einer drehbaren Welle befestigt, und eine zweite Trommel ist mit einer vorgegebenen zweiten Anzahl von Biegestiften und einem vorgegebenen ersten Abstand zur ersten Trommel auf der drehbaren Welle befestigt.

### Offenbarung der Erfindung

Die erfindungsgemäße Vorrichtung zur Herstellung von Drahtwicklungen und das erfindungsgemäße Verfahren zur Herstellung von Drahtwicklungen mit den Merkmalen der unabhängigen Patentansprüche 1 und 10 haben demgegenüber den Vorteil, dass die Drahtaufwicklung auf den Trommeln unter elastischer Drahtspannung erfolgt, und der Draht durch die elastische Drahtspannung während des Wickelvorgangs zwischen den beiden Biegestiften gerichtet wird.

Ausführungsformen der vorliegenden Erfindung ermöglichen in vorteilhafter Weise die einfache und schnelle Umsetzung auch von schwierigen Wickelanforderungen für den Wickeldraht, so dass vorzugsweise Drahtwicklungen für elektrische Antriebe und Generatoren hergestellt werden können.

Eine erfindungsgemäße Vorrichtung zur Herstellung von Drahtwicklungen umfasst mindestens zwei drehbeweglich gelagerte Trommeln, welche mit einem vorgegebenen Abstand zueinander montiert sind. Die mindestens zwei Trommeln weisen jeweils mindestens einen Biegestift auf, welche im Wesentlichen senkrecht abstehend an einer Mantelfläche der korrespondierenden Trommel befestigt sind. Des Weiteren ist eine bewegliche Drahtführungsvorrichtung vorgesehen, welche den Draht um die von den mindesten zwei Trommeln abstehenden Biegestifte wickelt, um mindestens eine Drahtwindung zu erzeugen. Zudem richtet die Drahtführungsvorrichtung den Draht zwischen zwei Biegestiften unter einer vorgebbaren elastischen Spannung aus und wickelt den Draht unter Spannung durch eine Rotationsbewegung um den jeweiligen Biegestift.

Eine erste Trommel ist mit einer vorgegebenen ersten Anzahl von Biegestiften an einem Randbereich auf einer drehbaren Welle befestigt, eine zweite Trommel ist mit einer vorgegebenen zweiten Anzahl von Biegestiften und einem vorgegebenen ersten Abstand zur ersten Trommel auf der drehbaren Welle befestigt, und erfindungsgemäß ist eine dritte Trommel mit einer vorgegebenen dritten Anzahl von Biegestiften und einem vorgegebenen zweiten Abstand zur ersten oder zweiten Trommel auf der Welle befestigt ist.

Ein erfindungsgemäßes Verfahren zur Herstellung von Drahtwicklungen, insbesondere für elektrische Antriebe und Generatoren, umfasst einen Wickelvorgang, bei welchem ein Draht von einer beweglichen Drahtführungsvorrichtung um von mindesten zwei drehbeweglich gelagerten Trommeln im Wesentlichen senkrecht abstehende Biegestifte gewickelt wird, um mindestens eine Drahtwindung zu erzeugen. Hierbei weisen die mindestens zwei Trommeln einen vorgegebenen Abstand zueinander auf. Zudem wird der Draht unter einer vorgegebenen elastischen Spannung zwischen zwei Biegestiften ausgerichtet und unter Spannung durch eine Rotationsbewegung um den jeweiligen Biegestift gewickelt.

Eine erste Trommel wird mit einer vorgegebenen ersten Anzahl von Biegestiften
an einem Randbereich auf einer drehbaren Welle befestigt, eine zweite Trommel wird mit einer vorgegebenen zweiten Anzahl von Biegestiften und einem vorgegebenen ersten Abstand zur ersten Trommel auf der drehbaren Welle befestigt, und erfindungsgemäß wird eine dritte Trommel mit einer vorgegebenen dritten Anzahl von Biegestiften und einem vorgegebenen zweiten Abstand zur ersten oder zweiten Trommel auf der Welle befestigt.

Durch die in den abhängigen Ansprüchen aufgeführten Maßnahmen und Weiterbildungen sind vorteilhafte Verbesserungen der im unabhängigen Patentanspruch 1 angegebenen Vorrichtung zur Herstellung von Drahtwicklungen und des im unabhängigen Patentanspruch 10 angegebenen Verfahrens möglich.

In vorteilhafter Weise können die erste Anzahl von Biegestiften und/oder die zweite Anzahl von Biegestiften und/oder der erste Abstand und/oder der zweite Abstand in Abhängigkeit von Wickelanforderungen des Wickeldrahtes vorgegeben werden. Hierbei gibt der erste Abstand zwischen der ersten und zweiten Trommel beispielsweise die Länge der einzelnen Windungen vor und der zweite Abstand zwischen der ersten bzw. zweiten und dritten Trommel gibt beispielweise die Länge einer Endwindung vor. Dadurch ist es in vorteilhafter Weise möglich, die erfindungsgemäße Vorrichtung an verschiedene herzustellende Drahtwicklungen für elektrische Antriebe und Generatoren anzupassen. So können die Trommeln beispielsweise lösbar auf der Welle befestigt und bei Bedarf an eine andere Position verschoben werden, um die Abstände zwischen den Trommeln zu verändern. Zudem können die Trommeln ausgetauscht werden, um eine andere Anzahl und Form von Biegestiften zu erhalten. Als weitere Möglichkeit können verschiedene austauschbare Wickeltrommeln verwendet werden, welche jeweils eine Welle umfassen, auf welcher eine vorgegebene Anzahl von Trommeln mit vorgegebenen Abständen zueinander angeordnet sind, welche eine vorgegebene Anzahl von Biegestiften aufweisen, um den Anpassungsvorgang der Wickelvorrichtung an verschiedene Drahtwicklungen zu beschleunigen. Die Wickeltrommeln unterscheiden sich dann beispielsweise durch die Positionen und Ausführungsformen der Trommeln. Gleichzeitig taktet die Wickeltrommel durch die Anordnung der Biegestifte auf den Trommeln die Teilung von Wicklung zu Wicklung und fördert gleichzeitig den Endlosdraht in Richtung eines Präge- und Schneidwerkzeugs.

In vorteilhafter Ausgestaltung der erfindungsgemäßen Vorrichtung ist die drehbare Welle von einem ersten Antrieb in Abhängigkeit von Wickelanforderungen des Wickeldrahtes in zwei Drehrichtungen antreibbar. Durch die Drehung der Welle können in vorteilhafter Weise verschiedene Vorschübe für die einzelnen Windungen vorgegeben werden, um eine flache Wicklung zu erzeugen.

In weiterer vorteilhafter Ausgestaltung der erfindungsgemäßen Vorrichtung ist die Drahtführungsvorrichtung von einem zweiten Antrieb in Abhängigkeit von Wickelanforderungen des Wickeldrahtes in zwei Rotationsrichtungen antreibbar, um den Draht um die Biegestifte zu wickeln. Des Weiteren kann die Drahtführungsvorrichtung von einem dritten Antrieb auf einem Schlitten translatorisch bewegt werden, um die Drahtführungsvorrichtung in Abhängigkeit von Wickelanforderungen des Wickeldrahtes in vorteilhafter Weise an verschiedene Anfahrpunkte zu bewegen. Die verschiedenen Anfahrpunkte stimmen vorzugsweise mit Positionen der Trommeln auf der Welle überein.

In weiterer vorteilhafter Ausgestaltung der erfindungsgemäßen Vorrichtung weisen die Biegestifte jeweils ein Profil auf, welches über die Drahtbiegung abbildbar ist. Das Profil kann beispielsweise rund oder vieleckig ausgeführt sein, um verschiedene Biegeradien und/oder Kurvenformen zu erzeugen. Zudem kann die Drahtführungsvorrichtung die Drahtspannung während des Biegevorgangs erhöhen, um den Draht am Profil des jeweiligen Biegestifts anzulegen.

In weiterer vorteilhafter Ausgestaltung der erfindungsgemäßen Vorrichtung weisen die Trommeln jeweils ein Rund- und/oder Vieleckprofil auf. Hierbei erleichtert die Ausführung als Vieleckprofil mit einer Mehrzahl von geraden Mantelteilflächen die Anordnung und Befestigung der Biegestifte.

In weiterer vorteilhafter Ausgestaltung der erfindungsgemäßen Vorrichtung ist die elastische Spannung so vorgegeben, dass der Durchmesser des Drahtes sich während des Wickelvorgangs um maximal +/- 2% ändert. Dadurch können in vorteilhafter Weise geforderte Toleranzen für die fertige Drahtwicklung eingehalten werden.

Die erste Anzahl von Biegestiften und/oder die zweite Anzahl von Biegestiften und/oder der erste Abstand und/oder der zweite Abstand werden in Abhängigkeit von Wickelanforderungen des Wickeldrahtes vorgegeben. Hierbei gibt der erste Abstand zwischen der ersten und zweiten Trommel beispielsweise die Länge der einzelnen Windungen vor und der zweite Abstand zwischen der ersten bzw. zweiten und dritten Trommel gibt beispielweise die Länge einer Endwindung vor.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine perspektivische Darstellung eines Ausführungsbeispiels einer Vorrichtung zur Herstellung von Drahtwicklungen.
Fig. 2 zeigt eine weitere perspektivische Darstellung des Ausführungsbeispiels aus Fig. 1.
Fig. 3 zeigt eine schematische Perspektivdarstellung eines Teils eines Ausführungsbeispiels einer Wickeltrommel für die Vorrichtung zur Herstellung von Drahtwicklungen aus Fig. 1 und 2.
Fig. 4 zeigt eine Drahtwicklung, welche mit der Vorrichtung zur Herstellung von Drahtwicklungen gemäß Fig. 1 bis 3 hergestellt wurde.

### Ausführungsformen der Erfindung

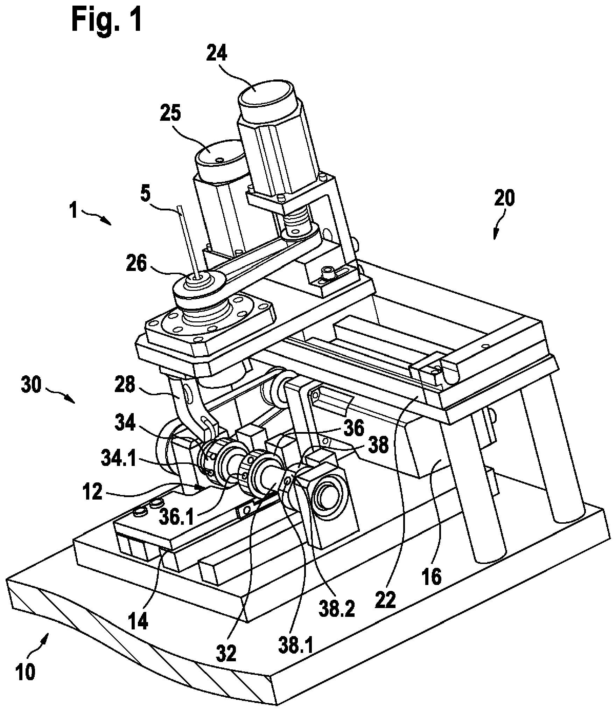

Wie aus Fig. 1 bis 3 ersichtlich ist, umfasst das dargestellte Ausführungsbeispiel einer Vorrichtung 1 zur Herstellung von Drahtwicklungen 7 drei drehbeweglich gelagerte Trommeln 34, 36, 38, welche mit einem vorgegebenen Abstand zueinander montiert sind. Die Trommeln 34, 36, 38 weisen jeweils mindestens einen Biegestift 34.1, 36.1, 38.1 auf, welche im Wesentlichen senkrecht abstehend an einer Mantelfläche 34.2, 36.2, 38.2 der korrespondierenden Trommel 34, 36, 38 befestigt sind. Eine bewegliche als so genannter Flyer ausgeführte Drahtführungsvorrichtung 28 wickelt den Draht 5 um die von mindesten zwei Trommeln 34, 36, 38 abstehenden Biegestifte 34.1, 36.1, 38.1, um mindestens eine Drahtwindung 7.1, 7.2 zu erzeugen.

Erfindungsgemäß richtet die Drahtführungsvorrichtung 28 den Draht 5 zwischen zwei Biegestiften 34.1, 36.1, 38.1 unter einer vorgebbaren elastischen Spannung aus und wickelt den Draht unter Spannung durch eine Rotationsbewegung um den jeweiligen Biegestift 34.1, 36.1, 38.1.

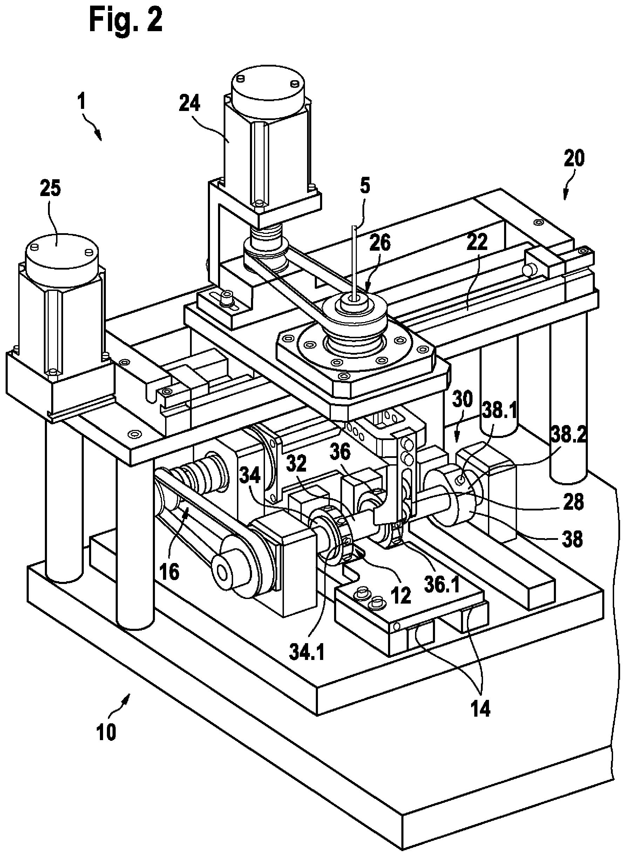

Wie aus Fig. 1 und 2 weiter ersichtlich ist, sind die Trommeln 34, 36, 38 auf einer drehbaren Welle 32 befestigt und bilden eine Wickeltrommel 30 aus. Hierzu ist eine erste Trommel 34 mit einer vorgegebenen ersten Anzahl von Biegestiften 34.1 an einem linken Randbereich auf der drehbaren Welle 32 befestigt. Eine zweite Trommel 36 mit einer vorgegebenen zweiten Anzahl von Biegestiften 36.1 ist mit einem vorgegebenen ersten Abstand zur ersten Trommel 34 auf der drehbaren Welle 32 befestigt, und eine dritte Trommel 38 mit einer vorgegebenen dritten Anzahl von Biegestiften 38.1 ist mit einem vorgegebenen zweiten Abstand zur ersten oder zweiten Trommel 34, 36 auf der Welle 32 befestigt. Die erste Anzahl von Biegestiften 34.1 und/oder die zweite Anzahl von Biegestiften 36.1 und/oder der erste Abstand und/oder der zweite Abstand sind in Abhängigkeit von Wickelanforderungen des Wickeldrahtes 5 vorgegeben. Zu diesem Zweck kann die Befestigungsposition der Trommeln 34, 36, 38 auf der Welle 32 in vorteilhafter Weise beispielsweise durch Verschieben der Trommeln 34, 36, 38 auf der Welle 32 oder durch Austausch der Wickeltrommel 30 verändert werden.

Im dargestellten Ausführungsbeispiel ist die Wickeltrommel 30 mit der Welle 32 und den Trommeln 34, 36, 38 an einem Unterbau 10 der Vorrichtung 1 zur Herstellung von Drahtwicklungen 7 angeordnet. Des Weiteren weist der Unterbau 10 einen ersten Antrieb 16 auf, welcher die Welle 32 in Abhängigkeit von Wickelanforderungen des Wickeldrahtes 5 in zwei Drehrichtungen antreiben kann. Zudem ist am Unterbau 10 ein entsprechendes Drahtführungssystem mit Rollen oder Kufen vorgesehen, um die einzelnen Windungen 7.1, 7.2 des Drahtes 5 über einen Abstreifer 12 von der Wickeltrommel 30 in einen Ausgabespalt 14 zu führen. Durch den Ausgabespalt 14 werden die von der Wickeltrommel 30 abgestreiften Windungen 7.1, 7.2 als flaches Paket aus der Vorrichtung 1 ausgeschoben. In Abrollrichtung kann zudem eine nicht dargestellte Presse mit Präge- und Schneidwerkzeug in die Vorrichtung 1 zur Herstellung von Drahtwicklungen 7 integriert werden.

An einem Aufbau 20 der Vorrichtung 1 zur Herstellung von Drahtwicklungen 7 ist die beispielsweise als Flyer für Drahtdicken < 1mm Drahtdurchmesser ausgeführte Drahtführungsvorrichtung 28 auf einem Portal bzw. einer Konsole starr oder beweglich angeordnet. Der Draht gelangt aus einem nicht dargestellten Drahtfass in eine Drahtzuführung 26 der Drahtführungsvorrichtung 28. Die Drahtführungsvorrichtung 28 kann von einem zweiten Antrieb 24 in Abhängigkeit von Wickelanforderungen des Wickeldrahtes 5 in zwei Rotationsrichtungen angetrieben werden. Zusätzlich wird die Drahtführungsvorrichtung 28 im dargestellten Ausführungsbeispiel von einem dritten Antrieb 25 auf einem Schlitten 22 translatorisch bewegt, um die Drahtführungsvorrichtung 28 in Abhängigkeit von Wickelanforderungen des Wickeldrahtes 5 an verschiedene Anfahrpunkte zu bewegen. Hierbei stimmen die Anfahrpunkte mit Positionen der Trommeln 34, 36, 38 auf der Welle 32 überein.

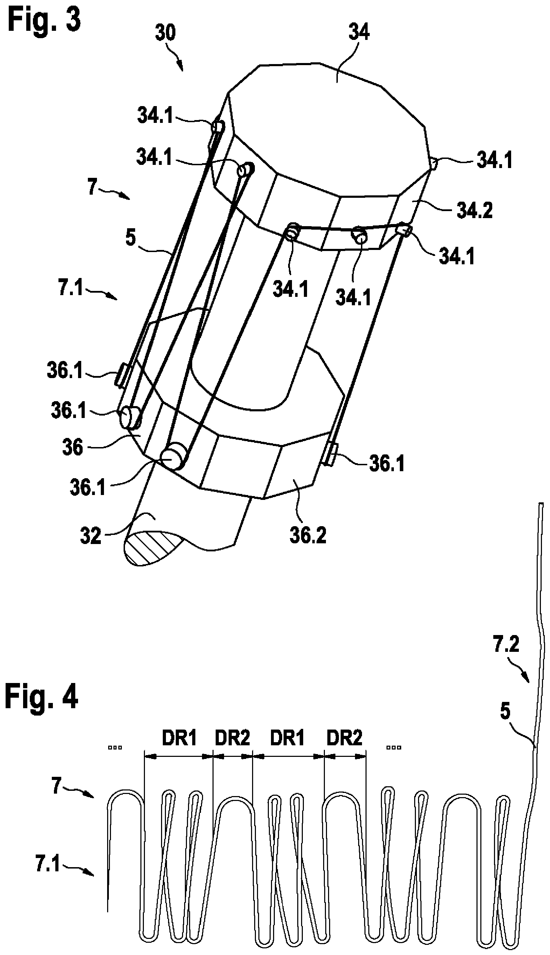

Wie insbesondere aus Fig. 3 weiter ersichtlich ist, weisen die Biegestifte 34.1, 36.1, 38.1 jeweils ein Profil auf, welches über die Drahtbiegung abgebildet wird. Das Profil kann beispielsweise rund oder vieleckig ausgeführt sein, um verschiedene Biegeradien und/oder Kurvenformen für die einzelnen Windungen 7.1, 7.2 zu erzeugen, wie beispielsweise aus Fig. 4 ersichtlich ist. Zudem kann die Drahtführungsvorrichtung 28 die Drahtspannung während des Biegevorgangs erhöhen, um den Draht 5 an das jeweilige Profil der Biegestifte 34.1, 36.1, 38.1 anzulegen.

Wie aus Fig. 3 weiter ersichtlich ist, weisen die erste und zweite Trommel 34, 36 im dargestellten Ausführungsbeispiel ein Vieleckprofil auf, so dass die Mantelfläche der Trommeln 34, 36 jeweils eine Mehrzahl von geraden Mantelteilflächen 34.1, 36.1 aufweisen. Dies gilt auch für die in Fig. 3 nicht dargestellte dritte Trommel 38, welche im dargestellten Ausführungsbeispiel zur Ausführung der Endwindung 7.2 nur einen auf einer geraden Mantelteilfläche 38.2 angeordneten Biegestift 38.1 aufweist, wie aus Fig. 1 und 2 ersichtlich ist. Die restliche Mantelfläche weist einen teilrunden Querschnitt auf.

Wie aus Fig. 4 ersichtlich ist, weist eine dargestellte Drahtwicklung 7, welche als Einzelphase einer Endloswicklung für Generatoren verwendet werden kann, mehrere Hauptwindungen 7.1 und eine Endwindung 7.2 auf. Hierbei weisen die Hauptwindungen verschiedene Biegeradien auf, welche über Biegestifte 34.1, 36.1, 38.1 mit verschiedenen Profilen und über verschiedene Drehrichtungen DR1, DR2 und Vorschübe der Wickeltrommel 30 erzeugt werden.

Die dargestellte Vorrichtung 1 zur Herstellung von Drahtwicklungen 7 ist insbesondere zur Herstellung von Drahtwicklungen 7 für elektrische Antriebe und Generatoren geeignet. Bei der Herstellung einer Endloswicklung für Generatoren werden Einzelphasen 7 vor dem Biegen und Schweißen in ein Flachpaket eingelegt und verdichtet.

Zur Herstellung der Drahtwicklung 7 bzw. der Einzelphase wickelt die Drahtführungsvorrichtung 28 durch eine Rotationsbewegung den Draht 5 um die Biegestifte 34.1, 36.1, 38.1 auf den einzelnen Trommeln 34, 36, 38 der Wickeltrommel 30, wobei die Drahtführungsvorrichtung 28 durch Verschieben auf dem Schlitten 22 zwischen den Anfahrpunkten bzw. den einzelnen Trommeln 34, 36, 38 hin und her bewegt werden kann. Die Wickeltrommel 30 taktet mit ihrer Teilung von Wicklung zu Wicklung und fördert gleichzeitig die Endlosphase 7 in Richtung des nicht dargestellten Präge- und Schneidewerkzeugs.

Während des Wickelvorgangs sind in Abhängigkeit von der Wickelanforderung des Wickeldrahts 5 Drehbewegungen nach links und rechts für die Wickeltrommel 30 und der als Flyer ausgeführten Drahtführungsvorrichtung 28 vorgesehen. Zudem weist die Drahtführungsvorrichtung 28 drei Anfahrpunkte mit zugehöriger Anfahrstrecke auf. Die Drahtaufwicklung auf der Wickeltrommel 30 erfolgt unter elastischer Drahtspannung zwischen mindestens zwei Biegestiften 34.1, 36.1, 38.1 der Wickeltrommel 30. Im Bereich der Biegestifte 34.1, 36.1, 38.1 erfolgt die Drahtbiegung, wobei die Drahtspannung für das Anlegen des Drahtes 5 an das Profil des korrespondierenden Biegestifts 34.1, 36.1, 38.1 erhöht werden kann. Die elastische Spannung wird jedoch so vorgegeben, dass der Durchmesser des Drahtes 5 sich während des Wickel- bzw. Biegevorgangs um maximal +/- 2% ändert.

Ausführungsformen des erfindungsgemäßen Verfahrens zur Herstellung von Drahtwicklungen, insbesondere für elektrische Antriebe und Generatoren, verwenden eine bewegliche Drahtführungsvorrichtung 28, um einen Draht 5 zur Erzeugung von mindestens einer Drahtwindung 7.1, 7.2 um von mindesten zwei drehbeweglich gelagerten Trommeln 34, 36, 38 im Wesentlichen senkrecht abstehende Biegestifte 34.1, 36.1, 38.1 zu wickeln. Hierbei weisen die mindestens zwei drehbeweglich gelagerten Trommeln 34, 36, 38 einen vorgegebenen Abstand zueinander auf. Erfindungsgemäß wird der Draht 5 unter einer vorgegebenen elastischen Spannung zwischen zwei Biegestiften 34.1, 36.1, 38.1 ausgerichtet und unter Spannung durch eine Rotationsbewegung um den jeweiligen Biegestift 34.1, 36.1, 38.1 gewickelt. Eine erste Trommel 34 wird mit einer vorgegebenen ersten Anzahl von Biegestiften 34.1 an einem Randbereich auf einer drehbaren Welle 32 befestigt. Eine zweite Trommel 36 wird mit einer vorgegebenen zweiten Anzahl von Biegestiften 36.1 und einem vorgegebenen ersten Abstand zur ersten Trommel 34 auf der drehbaren Welle 32 befestigt. Zusätzlich wird eine dritte Trommel 38 mit einer vorgegebenen dritten Anzahl von Biegestiften 38.1 und einem vorgegebenen zweiten Abstand zur ersten oder zweiten Trommel 34, 36 auf der Welle 32 befestigt. In vorteilhafter Weise werden die erste Anzahl von Biegestiften 34.1 und/oder die zweite Anzahl von Biegestiften 36.1 und/oder der erste Abstand und/oder der zweite Abstand in Abhängigkeit von Wickelanforderungen des Wickeldrahtes 5 vorgegeben, um verschiedene Ausführungsformen von Drahtwicklungen erzeugen zu können.

## Patentansprüche

1. Vorrichtung zur Herstellung von Drahtwicklungen, insbesondere für elektrische Antriebe und Generatoren, mit mindestens zwei drehbeweglich gelagerten Trommeln (34, 36, 38), welche mit einem vorgegebenen Abstand zueinander montiert sind, wobei die mindestens zwei Trommeln (34, 36, 38) jeweils mindestens einen Biegestift (34.1, 36.1, 38.1) aufweisen, welche im Wesentlichen senkrecht abstehend an einer Mantelfläche (34.2, 36.2, 38.2) der korrespondierenden Trommel (34, 36, 38) befestigt sind, wobei eine bewegliche Drahtführungsvorrichtung (28) den Draht (5) um die von den mindesten zwei Trommeln (34, 36, 38) abstehenden Biegestifte (34.1, 36.1, 38.1) wickelt, um mindestens eine Drahtwindung (7.1, 7.2) zu erzeugen, wobei die Drahtführungsvorrichtung (28) den Draht (5) zwischen zwei Biegestiften (34.1, 36.1, 38.1) unter einer vorgebbaren elastischen Spannung ausrichtet und den Draht (5) unter Spannung durch eine Rotationsbewegung um den jeweiligen Biegestift (34.1, 36.1, 38.1) wickelt, wobei eine erste Trommel (34) mit einer vorgegebenen ersten Anzahl von Biegestiften (34.1) an einem Randbereich auf einer drehbaren Welle (32) befestigt ist, und wobei eine zweite Trommel (36) mit einer vorgegebenen zweiten Anzahl von Biegestiften (36.1) und einem vorgegebenen ersten Abstand zur ersten Trommel (34) auf der drehbaren Welle (32) befestigt ist, **dadurch gekennzeichnet, dass** eine dritte Trommel (38) mit einer vorgegebenen dritten Anzahl von Biegestiften (38.1) und einem vorgegebenen zweiten Abstand zur ersten oder zweiten Trommel (34, 36) auf der Welle (32) befestigt ist.

2. Vorrichtung nach Anspruch 1, **dadurch gekennzeichnet, dass** die erste Anzahl von Biegestiften (34.1) und/oder die zweite Anzahl von Biegestiften (36.1) und/oder der erste Abstand und/oder der zweite Abstand in Abhängigkeit von Wickelanforderungen des Wickeldrahtes (5) vorgegeben sind.

3. Vorrichtung nach Anspruch 1 oder 2, **dadurch gekennzeichnet, dass** die drehbare Welle (32) von einem ersten Antrieb (16) in Abhängigkeit von Wickelanforderungen des Wickeldrahtes (5) in zwei Drehrichtungen antreibbar ist.

4. Vorrichtung nach einem der Ansprüche 1 bis 3, **dadurch gekennzeichnet, dass** die Drahtführungsvorrichtung (28) von einem zweiten Antrieb (24) in Abhängigkeit von Wickelanforderungen des Wickeldrahtes (5) in zwei Rotationsrichtungen antreibbar ist.

5. Vorrichtung nach einem der Ansprüche 1 bis 4, **dadurch gekennzeichnet, dass** die Drahtführungsvorrichtung (28) von einem dritten Antrieb (25) auf einem Schlitten (22) translatorisch bewegbar ist, um die Drahtführungsvorrichtung (28) in Abhängigkeit von Wickelanforderungen des Wickeldrahtes (5) an verschiedene Anfahrpunkte zu bewegen.

6. Vorrichtung nach Anspruch 5, **dadurch gekennzeichnet, dass** die Anfahrpunkte mit Positionen der Trommeln (34, 36, 38) auf der Welle (32) übereinstimmen.

7. Vorrichtung nach einem der Ansprüche 1 bis 6, **dadurch gekennzeichnet, dass** die Biegestifte (34.1, 36.1, 38.1) jeweils ein Profil aufweisen, welches über die Drahtbiegung abbildbar ist.

8. Vorrichtung nach einem der Ansprüche 1 bis 7, **dadurch gekennzeichnet, dass** die Trommeln (34, 36, 38) jeweils ein Rund- und/oder Vieleckprofil aufweisen.

9. Vorrichtung nach einem der Ansprüche 1 bis 8, **dadurch gekennzeichnet, dass** die elastischen Spannung so vorgegeben ist, dass der Durchmesser des Drahtes (5) sich während des Wickelvorgangs um maximal +/- 2% ändert.

10. Verfahren zur Herstellung von Drahtwicklungen, insbesondere für elektrische Antriebe und Generatoren, wobei ein Draht (5) von einer beweglichen Drahtführungsvorrichtung (28) um von mindesten zwei drehbeweglich gelagerten Trommeln (34, 36, 38) im Wesentlichen senkrecht abstehende Biegestifte (34.1, 36.1, 38.1) gewickelt wird, um mindestens eine Drahtwindung (7.1, 7.2) zu erzeugen, und wobei die mindestens zwei Trommeln (34, 36, 38) einen vorgegebenen Abstand zueinander aufweisen, wobei der Draht (5) unter einer vorgegebenen elastischen Spannung zwischen zwei Biegestiften (34.1, 36.1, 38.1) ausgerichtet und unter Spannung durch eine Rotationsbewegung um den jeweiligen Biegestift (34.1, 36.1, 38.1) gewickelt wird, wobei eine erste Trommel (34) mit einer vorgegebenen ersten Anzahl von Biegestiften (34.1) an einem Randbereich auf einer drehbaren Welle (32) befestigt wird, und wobei eine zweite Trommel (36) mit einer vorgegebenen zweiten Anzahl von Biegestiften (36.1) und einem vorgegebenen ersten Abstand zur ersten Trommel (34) auf der drehbaren Welle (32) befestigt wird, **dadurch gekennzeichnet, dass** eine dritte Trommel (38) mit einer vorgegebenen dritten Anzahl von Biegestiften (38.1) und einem vorgegebenen zweiten Abstand zur ersten oder zweiten Trommel (34, 36) auf der Welle (32) befestigt wird.

11. Verfahren nach Anspruch 10, **dadurch gekennzeichnet, dass** die erste Anzahl von Biegestiften (34.1) und/oder die zweite Anzahl von Biegestiften (36.1) und/oder der erste Abstand und/oder der zweite Abstand in Abhängigkeit von Wickelanforderungen des Wickeldrahtes (5) vorgegeben werden.

## Claims

1. Device for producing wire windings, in particular for electrical drives and generators, with at least two rotationally mounted drums (34, 36, 38) which are mounted at a predetermined distance from one another, wherein the at least two drums (34, 36, 38) each have at least one bending pin (34.1, 36.1, 38.1), said bending pins being fastened to a circumferential surface (34.2, 36.2, 38.2) of the corresponding drum (34, 36, 38) in a manner protruding substantially perpendicularly, wherein a movable wire-guiding device (28) winds the wire (5) around the bending pins (34.1, 36.1, 38.1) protruding from the at least two drums (34, 36, 38), in order to produce at least one wire winding (7.1, 7.2), wherein the wire-guiding device (28) aligns the wire (5) between two bending pins (34.1, 36.1, 38.1) under a predeterminable elastic tension and winds the wire (5) under tension around the respective bending pin (34.1, 36.1, 38.1) by means of a rotational movement, wherein a first drum (34) is fastened on a rotatable shaft (32) at an edge region with a predetermined first number of bending pins (34.1), and wherein a second drum (36) is fastened on the rotatable shaft (32) with a predetermined second number of bending pins (36.1) and at a predetermined first distance from the first drum (34), **characterized in that** a third drum (38) is fastened on the shaft (32) with a predetermined third number of bending pins (38.1) and at a predetermined second distance from the first or second drum (34, 36).

2. Device according to Claim 1, **characterized in that** the first number of bending pins (34.1) and/or the second number of bending pins (36.1) and/or the first distance and/or the second distance are predetermined depending on winding requirements of the winding wire (5).

3. Device according to Claim 1 or 2, **characterized in that** the rotatable shaft (32) can be driven by a first drive (16) in two directions of rotation depending on winding requirements of the winding wire (5).

4. Device according to one of Claims 1 to 3, **characterized in that** the wire-guiding device (28) can be driven by a second drive (24) in two directions of rotation depending on winding requirements of the winding wire (5).

5. Device according to one of Claims 1 to 4, **characterized in that** the wire-guiding device (28) is movable in a translatory manner on a slide (22) by a third drive (25) in order to move the wire-guiding device (28) to different starting points depending on winding requirements of the winding wire (5).

6. Device according to Claim 5, **characterized in that** the starting points coincide with positions of the drums (34, 36, 38) on the shaft (32).

7. Device according to one of Claims 1 to 6, **characterized in that** the bending pins (34.1, 36.1, 38.1) each have a profile which can be depicted by the bending of the wire.

8. Device according to one of Claims 1 to 7, **characterized in that** the drums (34, 36, 38) each have a round and/or polygonal profile.

9. Device according to one of Claims 1 to 8, **characterized in that** the elastic tension is predetermined in such a manner that the diameter of the wire (5) changes by a maximum of +/- 2% during the winding operation.

10. Method for producing wire windings, in particular for electrical drives and generators, wherein a wire (5) is wound by a movable wire-guiding device (28) around bending pins (34.1, 36.1, 38.1) protruding substantially perpendicularly from at least two rotationally mounted drums (34, 36, 38), in order to produce at least one wire winding (7.1, 7.2), and wherein the at least two drums (34, 36, 38) are at a predetermined distance from one another, wherein the wire (5) is aligned under a predetermined elastic tension between two bending pins (34.1, 36.1, 38.1) and is wound under tension around the respective bending pin (34.1, 36.1, 38.1) by means of a rotational movement, wherein a first drum (34) is fastened on a rotatable shaft (32) at an edge region with a predetermined first number of bending pins (34.1), and wherein a second drum (36) is fastened on the rotatable shaft (32) with a predetermined second number of bending pins (36.1) and at a predetermined first distance from the first drum (34), **characterized in that** a third drum (38) is fastened on the shaft (32) with a predetermined third number of bending pins (38.1) and at a predetermined second distance from the first or second drum (34, 36).

11. Method according to Claim 10, **characterized in that** the first number of bending pins (34.1) and/or the second number of bending pins (36.1) and/or the first distance and/or the second distance are predetermined depending on winding requirements of the winding wire (5).

## Revendications

1. Dispositif destiné à la production d'enroulements de fils, en particulier pour des entraînements et des générateurs électriques, comprenant au moins deux tambours (34, 36, 38) montés tournants qui sont placés à une distance prédéterminée les uns des autres, dans lequel lesdits au moins deux tambours (34, 36, 38) présentent chacun au moins une tige de flexion (34.1, 36.1, 38.1) qui est fixée sur une surface circonférentielle (34.2, 36.2, 38.2) du tambour correspondant (34, 36, 38) de manière à faire saillie dans une direction sensiblement perpendiculaire, dans lequel un dispositif de guidage de fil mobile (28) enroule le fil (5) autour des tiges de flexion (34.1, 36.1, 38.1) faisant saillie sur lesdits au moins deux tambours (34, 36, 38) afin de former au moins une spire de fil (7.1, 7.2), dans lequel le dispositif de guidage de fil (28) oriente le fil (5) entre deux tiges de flexion (34.1, 36.1, 38.1) sous une tension élastique prédéfinissable et enroule le fil (5) en tension autour de la tige de flexion (34.1, 36.1, 38.1) respective par un mouvement de rotation, dans lequel un premier tambour (34) comprenant un premier nombre prédéterminé de tiges de flexion (34.1) est fixé au niveau d'une zone périphérique à un arbre rotatif (32), et dans lequel un deuxième tambour (36) comprenant un deuxième nombre prédéterminé de tiges de flexion (36.1) et à une première distance prédéterminée du premier tambour (34) est fixé à l'arbre rotatif (32), **caractérisé en ce qu'**un troisième tambour (38) comprenant un troisième nombre prédéterminé de tiges de flexion (38.1) et à une deuxième distance prédéterminée du premier ou deuxième tambour (34, 36) est fixé à l'arbre (32).

2. Dispositif selon la revendication 1, **caractérisé en ce que** le premier nombre de tiges de flexion (34.1) et/ou le deuxième nombre de tiges de flexion (36.1) et/ou la première distance et/ou la deuxième distance sont prédéfinis en fonction des besoins d'enroulement du fil d'enroulement (5).

3. Dispositif selon la revendication 1 ou 2, **caractérisé en ce que** l'arbre rotatif (32) peut être entraîné dans deux sens de rotation par un premier entraînement (16) en fonction des besoins d'enroulement du fil d'enroulement (5).

4. Dispositif selon l'une des revendications 1 à 3, **caractérisé en ce que** le dispositif de guidage de fil (28) peut être entraîné dans deux sens de rotation par un deuxième entraînement (24) en fonction des besoins d'enroulement du fil d'enroulement (5).

5. Dispositif selon l'une des revendications 1 à 4, **caractérisé en ce que** le dispositif de guidage de fil (28) peut être déplacé en translation sur un chariot (22) par un troisième entraînement (25) afin de déplacer le dispositif de guidage de fil (28) vers différents points de départ en fonction des besoins d'enroulement du fil d'enroulement (5).

6. Dispositif selon la revendication 5, **caractérisé en ce que** les points de départ coïncident avec les positions des tambours (34, 36, 38) sur l'arbre (32).

7. Dispositif selon l'une des revendications 1 à 6, **caractérisé en ce que** les tiges de flexion (34.1, 36.1, 38.1) présentent chacune un profil qui peut être représenté par la flexion du fil.

8. Dispositif selon l'une des revendications 1 à 7, **caractérisé en ce que** les tambours (34, 36, 38) présentent chacun un profil rond et/ou polygonal.

9. Dispositif selon l'une des revendications 1 à 8, **caractérisé en ce que** la tension élastique est prédéfinie de manière à ce que le diamètre du fil (5) varie au maximum de +/- 2 % pendant l'opération d'enroulement.

10. Procédé destiné à la production d'enroulements de fils, en particulier pour des entraînements et des générateurs électriques, dans lequel un fil (5) est enroulé par un dispositif de guidage de fil mobile (28) autour de tiges de flexion (34.1, 36.1, 38.1) faisant saillie dans une direction sensiblement verticale autour d'au moins deux tambours (34, 36, 38) montés tournants afin de former au moins un enroulement de fil (7.1, 7.2), et dans lequel lesdits au moins deux tambours (34, 36, 38) se trouvent à une distance prédéterminée l'un de l'autre, dans lequel le fil (5) est orienté entre deux tiges de flexion (34.1, 36.1, 38.1) sous une tension élastique prédéfinie et est enroulé sous tension autour de la tige de flexion (34.1, 36.1, 38.1) respective par un mouvement de rotation, dans lequel un premier tambour (34) comprenant un premier nombre prédéterminé de tiges de flexion (34.1) est fixé au niveau d'une zone périphérique à un arbre rotatif (32), et dans lequel un deuxième tambour (36) comprenant un deuxième nombre prédéterminé de tiges de flexion (36.1) et à une première distance prédéfinie du premier tambour (34) est fixé à l'arbre rotatif (32), **caractérisé en ce qu'**un troisième tambour (38) comprenant un troisième nombre prédéterminé de tiges de flexion (38.1) et à une deuxième distance prédéfinie du premier ou deuxième tambour (34, 36) est fixé à l'arbre (32).

11. Procédé selon la revendication 10, **caractérisé en ce que** le premier nombre de tiges de flexion (34.1) et/ou le deuxième nombre de tiges de flexion (36.1) et/ou la première distance et/ou la deuxième distance sont prédéfinis en fonction des besoins d'enroulement de fil du fil d'enroulement (5).
